# EUROPÄISCHE PATENTANMELDUNG

(11) **EP 0 797 262 A2**
(43) Veröffentlichungstag der Anmeldung: **24.09.1997**
(21) Anmeldenummer: 97101604.3
(22) Anmeldetag: 03.02.1997
(51) Int. Cl.: H01M 2/16, H01M 10/12

(54) **Elektrochemische Zelle**

(30) Priorität: 23.03.1996 DE 19611592
(71) Anmelder: VHB Industriebatterien GmbH, 58089 Hagen (DE)
(72) Erfinder: Borowski, Herbert, Dr., 58339 Breckerfeld (DE); Gütlich, Karl-Friedrich, Dr., 60594 Frankfurt (DE); Mischke, Jürgen, Dr., 58097 Hagen (DE)
(74) Vertreter: Köchling, Conrad-Joachim

(57) **Zusammenfassung**

Um eine elektrochemische Zelle, insbesondere als Bestandteil eines Akkumulators, bestehend aus einem Gefäß mit Elektrolyten, eingebautem Plattensatz mit mindestens einer Platte als positiver Elektrode und einer Platte als negativer Elektrode und zwischen den Platten angeordnetem Separator, zu schaffen, in dem der Elektrolyt festgelegt ist und der Säureschichtungen vermeidet, mechanisch hochbeanspruchbar ist und der nachfüllbar ist, wird vorgeschlagen, daß als Separator ein formstabiler, isolierender, mikroporöser und saugfähiger Strukturscheider (4) angeordnet ist.

## Beschreibung

Die Erfindung betrifft eine elektrochemische Zelle, insbesondere als Bestandteil eines Akkumulators, bestehend aus einem Gefäß mit eingebautem Plattensatz mit mindestens einer Platte als negativer Elektrode und zwischen den Platten angeordnetem Separator, in dem der schwefelsaure Elektrolyt festgelegt ist.

Derartige elektrochemische Zellen sind im Stand der Technik bekannt. Als Platten werden dabei Gitterplatten aus zweckmäßigen Bleilegierungen eingesetzt, in die die aktive Masse eingestrichen wird. Bei Röhrchenplatten besteht der Masseträger aus mehreren parallel zueinander liegenden Isolierstoffröhrchen, in welche die Masse eingefüllt wird.

Zur Festlegung des Elektrolyten in Bleisäurebatterien werden derzeit zwei Systeme eingesetzt. Zum einen erfolgt die Festlegung der verdünnten Schwefelsäure durch ein hochporöses Microfaservlies, zum anderen durch eine gelierte Kieselsäure.

Beide Systeme haben ihre Vor- und Nachteile. So tritt während des Zyklisierens (aufeinander folgende Entladungen und Aufladungen) bei mit Glasvlies separierten stehenden Zellen eine Säureschichtung auf, die zwar durch Lageänderungen der Zellen zu beheben ist, jedoch nur wenig durch Lade- oder Entlademethoden. Dies gilt insbesondere für stehende hohe Zellen.

Bei der Schwefelsäurefestlegung durch Gel beobachtet man zwar keine Säureschichtung, jedoch ist der Entladespannungsverlauf bei den Hochstromentladungen wesentlich schlechter als bei den Vliesbatterien.

Auch bezüglich des Sauerstoffkreislaufes besteht ein Unterschied zwischen den beiden Systemen der Elektrolytfestlegung. Während er bei der Vliesfestlegung schon nach wenigen Entladungen bei üblichen Ladeschlußströmen über 90 % Rekombinationsrate erreicht, müssen sich im mit Gel festgelegten Elektrolyt zuerst Risse durch Wasseraustrag herausbilden, so daß der beim Aufladen der positiven Elektrode entstehende Sauerstoff seinen Weg zum metallischen Blei der negativen Elektrode finden kann. Die Ausbildung dieser Risse erfolgt statistisch. Ihre Anzahl, Breite und Länge läßt sich nicht definiert steuern.

So kann es im Anwendungsfall, insbesondere in unterbrechungsfreien Stromversorgungsanlagen, in denen der Lagerhaltungsstrom sehr klein gehalten wird, bis zu zwei Jahren und länger dauern, um eine Rekombinationsrate mit dem gewünschten hohen Wirkungsgrad zu erreichen.

Ein weiterer nicht unerheblicher Unterschied liegt im Herstellungsverfahren. Vliesseparierte Zellen lassen sich mit leicht modifizierten, in der Akkumulatorenindustrie benutzten Fertigungseinrichtungen herstellen und sowohl Tank- als auch Blockkasten formieren. Mit Gel festgelegte Zellen werden mit einem handelsüblichen Scheider separiert und können dann im Blockkastenverfahren formiert werden. Danach wird zweckmäßigerweise der Elektrolyt ausgekippt und das Gel eingefüllt. Blockkastenformationen in gelierfähigen Elektrolyten sind möglich, erfordern aber einen hohen Aufwand, um Gasblasen am Ende der Formation nicht im Gel einzuschließen. Batterien, deren Elektrolyt mit Gel festgelegt ist, sind wegen des aufwendigen Füllvorganges und der stark gesunkenen Preise für die konkurierenden Mikrofaser-Vliese teurer in der Herstellung. Der Füllvorgang mit Gel wird auch um so aufwendiger, je dünner die Elektroden und damit je kleiner die zu füllenden Freiräume zwischen Scheider und Elektrode werden.

Auch in bezug auf den Thermal-Run-away unterscheiden sich beide Systeme. Wegen des gröberen Porensystems des Glasfaservlieses und des fehlenden Separators zwischen den Elektroden verschiedener Polarität kann der Sauerstoff verhältnismäßig ungehindert von seinem Entstehungsort zu verzehrenden negativen Elektroden wandern. Dadurch kann sich die Reaktion so stark aufschaukeln, daß der Elektrolyt zu sieden beginnt, verdampft, sich das Zellgefäß verformt und im schlimmsten Fall eine Verpuffung erfolgt. In Gel gefüllten Zellen muß der Sauerstoff durch das kleinporige System des Gels diffundieren, ein äußerst langwieriger Vorgang, oder über die Risse zur negativen Verzehrelektrode gelangen. Beide Vorgänge wirken begrenzend und verzögern dadurch den Thermal-Run-away. Er setzt also wesentlich später und nicht so heftig ein.

Eine weitere Eigenschaft, in der sich die beiden Elektrolytfestlegungsarten unterscheiden, ist das Nachfüllen von zersetztem beziehungsweise verdampftem Elektrolytwasser. Auch unter Inkaufnahme von Säureschichtung kann doch in Vlies separierten Zellen bei zu hohem Wasserverlust Wasser nachgefüllt werden. Ein durch zu hoher Wasserverlust geschrumpftes Gel quillt durch Wasserzugabe nicht mehr in seinen ursprünglichen Zustand zurück.

Leichte Kapazitätsverbesserungen der Minderkapazität lassen sich jedoch erzielen.

Gefäße für Batterien oder Zellen werden häufig wegen der Ausbauchungen im Betrieb, insbesondere bei der Aufladung, mit Stabilisierungsrippen versehen. Die Abmessungen, die Anzahl und Gestalt dieser Stabilisierungsrippen hängen im wesentlichen von den Betriebsbedingungen, dem Gefäßmaterial, den Gefäßabmessungen und dem inneren Plattensatzaufbau ab. Üblicherweise berechnet man solche Versteifungen mit Finite-Elemente-Programmen, die je nach Anforderungen und gewünschter Genauigkeit mehr oder weniger aufwendig und teuer sein können.

Um solche Ausbeulungen an den Breitseiten des Plattenpaketes wegen der geforderten optimalen Pressung des Plattensatzes unerwünschte Auswirkungen in Form von Kapazitätsabfällen haben können, kann auf eine Verrippung nicht verzichtet werden.

Ein weiterer Punkt, dem bei der Auslegung der Rippen wenig Beachtung geschenkt wird, ist das Einfallen der Gefäßwände bei Unterdruck in den mit Ventilen versehenen Zellen. Unterdruck tritt immer dann auf, wenn die Zellen gut geladen oder längere Zeit auf Erhaltungsladung standen, einen guten Gasverzehr haben und danach längere Zeit gelagert wurden.

Bei diesem Einfallen wird in vliesseparierten Zellen Elektrolyt aus dem Vlies herausgedrückt. Der Elektrolyt füllt vorhandene Freiräume und kann im Extremfall bei Wiederaufladung durch das Ventil als Aerosol austreten. Auf alle Fälle begünstigen solche Betriebszustände verstärkte Säureschichtung, die die bekannten Nachteile, wie ungleichmäßige Belastung der Elektroden über die Höhe und damit lokale Massenüberbeanspruchung mit Ausschlammung und verstärkter Gitterkorrosion haben.

Ausgehend von diesem Stand der Technik liegt der Erfindung die Aufgabe zugrunde, eine elektrochemische Zelle gattungsgemäßer Art zu schaffen, bei der die aufgeführten Nachteile vermieden beziehungsweise minimiert sind.

Die Lösung dieser Aufgabe ist im Anspruch 1 angegeben. Vorteilhafte Weiterbildungen sind in den Unteransprüchen bezeichnet.

Bei dem Strukturscheider handelt es sich um einen formstabilen, insbesondere quaderförmigen Körper, der den gesamten Raum zwischen den Elektroden ausfüllen soll, der den für die Entladungen notwendigen Elektrolyten aufnehmen und festlegen soll und der die Entgasung der Elektroden gewährleistet, mechanischem Druck, der insbesondere beim Unterdruck in den Zellen auftritt, widerstehen kann und ein Porensystem hat, das die Säureschichtung weitestgehend vermeidet.

Die mechanische Festigkeit des Strukturscheiders bewirkt eine Anpressung der Masse an die Gitter von pastierten Gitterelektroden. Durch die mechanische Fixierung werden Gitter und Masse im innigen Kontakt gehalten, wie es nur bei aufwendigeren Röhrchenelektroden möglich ist, wodurch die Zyklenfestigkeit von Röhrchenzellenkonstruktionen auch bei pastierten Gitterelektroden erreicht werden kann.

Ein weiterer Vorteil, der aus der erfindungsgemäßen Ausbildung resultiert, ist die minimale formschlüssige Pressung des Plattensatzes während der Herstellung des Plattensatzes auf allgemein üblichen Fertigungsanlagen im Gegensatz zu mit vliesseparierten Zellen, wo bis zu 35 % des Vliesvolumens komprimiert werden.

Das mit Säure befüllbare Porenvolumen der Strukturscheider bleibt über die Gebrauchsdauer erhalten und aufnahmefähig für Säure. Damit ist das Nachfüllen von im Betrieb verlorengegangenem Wasser, das eine Aufkonzentration der Schwefelsäure bewirkt, möglich. Anders bei Gel und Vlies.

Hier ändert sich im Laufe der Zeit und mit den Betriebsbedingungen das befüllbare Porenvolumen. Insbesondere beim Gel ist diese Veränderung weitestgehend irreversibel. Diese Änderungen führen auch zu einer Änderung des Gesamtverhaltens. Der Strukturscheider jedoch bildet gemeinsam mit den Elektroden ein ganzheitliches, dauerhaftes mikroporöses System.

Nach der Erfindung ausgebildete elektrochemische Zellen erreichen mindestens übliche Zyklenlebensdauer, wobei aber gegenüber dem Stand der Technik erhebliche Vorteile erreicht sind.

Die Erfindung ist nachstehend anhand einer Schemazeichnung erläutert.

Es zeigt:
- Figur 1: einen Plattensatz mit einem erfindungsgemäßen Strukturscheider in Ansicht;
- Figur 2: einen in einer elektrochemischen Zelle angeordneten Plattensatz ausschnittsweise in Stirnansicht.

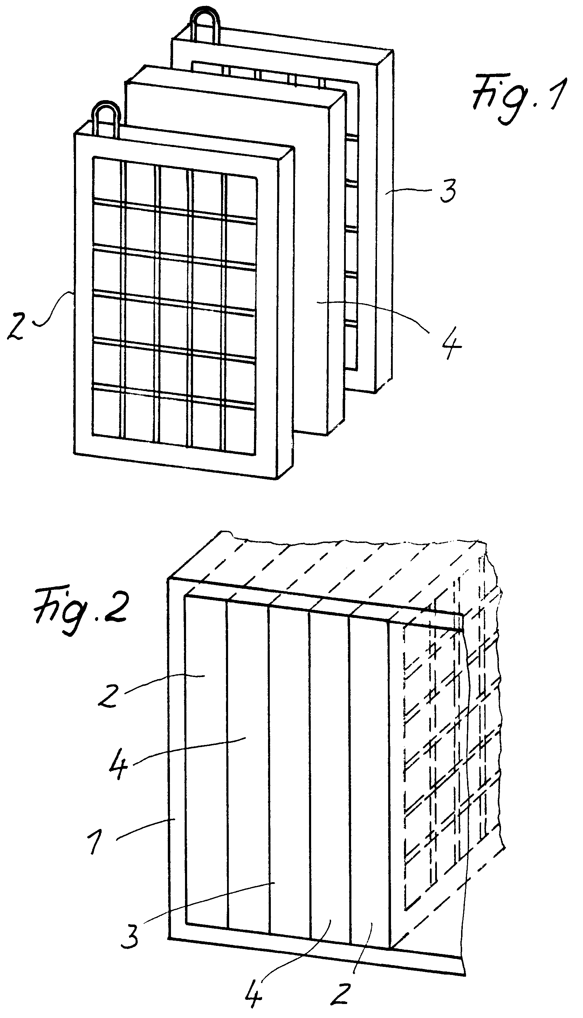

Die elektrochemische Zelle, insbesondere als Bestandteil eines Akkumulators, besteht aus einem Gefäß 1 mit eingebautem Plattensatz mit mindestens einer Platte 2 als negative Elektrode und einer Platte 3 als positive Elektrode und zwischen den Platten angeordneten Strukturscheidern 4. In dem Gefäß ist Elektrolyt, insbesondere schwefelsaurer Elektrolyt, in den Elektroden und in den Strukturscheidern festgelegt. Der Strukturscheider 4 dient als Separator, wobei der Strukturscheider 4 formstabil, isolierend, porös und saugfähig ist.

Die Platten 2,3 sind als Gitterplatten ausgebildet, wobei in der Einbausollage sich der Strukturscheider 4 flächig an die Flächen der separierten Platten 2,3 anlegt.

Ein Aufgehen der aktiven Massen wird durch den Strukturscheider kontrolliert und begrenzt. Der Strukturscheider 4 kann aus geeignetem Kunststoffmaterial oder auch aus anorganischem Werkstoff oder einer Mischung von beidem bestehen. Bei der Herstellung aus Kunststoff kann die Porösität durch Einbringen eines Porenbildners erzeugt werden. Der Strukturscheider kann aus einer einheitlichen, oder mehreren gleichartigen oder verschiedenartigen Lagen bestehen.

Vorzugsweise bei großen Elektrodenflächen weist der Strukturscheider 4 außenflächig Entgasungsbereiche, beispielsweise schmale Rillen oder dergleichen Strukturen auf, mittels derer eine sichere Entgasung der Platten 2,3 gewährleistet ist, aber nur eine unwesentliche Beeinflussung der Entladekennlinien erfolgt. Die großflächige Berührung von Elektroden und Strukturscheider bleibt im wesentlichen erhalten. Der Strukturscheider 4 weist vorzugsweise eine solche Porenverteilung auf, daß 80 % der Poren einen mittleren Durchmesser von 0,05 bis 20 µm haben, aber vorzugsweise einen Durchmesser von 0,2 bis 8 µm.

Durch eine erfindungsgemäß aufgebaute elektrochemische Zelle mit dem erfindungsgemäßen Strukturscheider 4 wird erreicht, daß der gesamte Raum zwischen den Platten 2,3 durch den Strukturscheider 4 ausgefüllt ist, wobei der Strukturscheider den Großteil des für die Entladungen notwendigen Elektrolyten aufnimmt und festlegt. Durch entsprechende Strukturierung des Strukturscheiders 4 ist auch eine Entgasung der Elektrodenplatten gewährleistet. Das System kann dem üblicherweise auftretenden mechnischen Druck, insbesondere einem Unterdruck, der in der Zelle auftritt, widerstehen. Durch das Porensystem des Strukturscheiders wird auch eine Säureschichtung vermieden.

Es ist auch das Nachfüllen von zersetztem beziehungsweise verdampftem Elektrolytwasser in einfacher Weise möglich, wobei der Elektrolyt auch nach dem Nachfüllen im Strukturscheider 4 festgelegt ist.

Die Erfindung ist nicht auf das Auführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Elektrochemische Zelle, bestehend aus einem Gefäß (1) mit Elektrolyt, eingebautem pastierten Plattensatz mit mindestens einer Platte (3) als positiver Elektrode und einer Platte (2) als negativer Elektrode und zwischen den Platten (2,3) angeordnetem Separator in dem der Elektrolyt festgelegt ist, wobei als Separator ein formstabiler, isolierender, mikroporöser und saugfähiger Strukturscheider (4) angeordnet ist, der den Zwischenraum zwischen den Platten (2,3) unterschiedlicher Polarität voll ausfüllt und wobei die Platten (2,3) sich flächig an den Flächen des Strukturscheiders (4) abstützen und somit die pastierte Masse an die Platten (2,3) gepreßt gehalten ist.

2. Elektrochemische Zelle nach Anspruch 1, **dadurch gekennzeichnet**, daß die Platten (2,3) als Gitterplatten ausgebildet sind.

3. Elektrochemische Zelle nach Anspruch 1 oder 2, **dadurch gekennzeichnet**, daß der Strukturscheider (4) eine Porösität von ≥ 70 % aufweist.

4. Elekrochemische Zelle nach Anspruch 1 bis 3, **dadurch gekennzeichnet**, daß der Strukturscheider (4) eine solche Porenverteilung aufweist, daß etwa 80 % der Poren einen mittleren Durchmessser von 0,05 bis 20 µm haben.

5. Elektrochemische Zelle nach Anspruch 4, **dadurch gekennzeichnet**, daß etwa 80 % der Poren einen mittleren Durchmesser von 0,2 bis 8 µm haben.

6. Elektrochemische Zelle nach Anspruch 1 bis 5, **dadurch gekennzeichnet**, daß der Strukturscheider (4) aus Kunststoff besteht.

7. Elektrochemische Zelle nach Anspruch 1 bis 5, **dadurch gekennzeichnet**, daß der Strukturscheider (4) aus anorganischem Werkstoff besteht.

8. Elektrochemische Zelle nach Anspruch 7, **dadurch gekennzeichnet**, daß der Strukturscheider (4) aus gesintertem Glas besteht.

9. Elektrochemische Zelle nach Anspruch 1 bis 6, **dadurch gekennzeichnet**, daß das Porensystem bei einem Strukturscheider (4) aus Kunststoff durch einen in den Kunststoff eingebrachten Porenbildner erzeugt ist.

10. Elektrochemische Zelle nach Anspruch 1 bis 9, **dadurch gekennzeichnet**, daß der Strukturscheider (4) aus einem Gemisch von anorganischen und/oder organischen Materialien besteht.

11. Elektrochemische Zelle nach Anspruch 10, **dadurch gekennzeichnet**, daß der Strukturscheider (4) aus einem Gemisch von Kieselsäure einerseits und PVC oder PE oder PP oder ähnlichem Kunststoffmaterial andererseits besteht.

12. Elektrochemische Zelle nach Anspruch 1 bis 11, **dadurch gekennzeichnet**, daß der Strukturscheider (4) außenflächig mit Entgasungsbereichen versehen ist, mittels derer eine sichere Entgasung der Platten (2,3) gewährleistet ist, aber nur eine unwesentliche Beeinflussung der Entladekennlinien erfolgt.

13. Elektrochemische Zelle nach Anspruch 12, **dadurch gekennzeichnet**, daß die Entgasungsbereiche durch schmale Rillen oder dergleichen Strukturen gebildet sind.

14. Elektrochemische Zelle nach Anspruch 1 bis 13, **dadurch gekennzeichnet**, daß der Strukturscheider (4) aus zwei oder mehreren Lagen zusammengesetzt ist.

15. Elektrochemische Zelle nach Anspruch 1 bis 14, **dadurch gekennzeichnet**, daß die Strukturscheiderlagen aus gleichartigem Material mit gleicher oder unterschiedlicher Porenverteilung bestehen.

16. Elektrochemische Zelle nach Anspruch 1 bis 15, **dadurch gekennzeichnet**, daß die Strukturscheiderlagen aus mindestens zwei verschiedenartigen Werkstoffen mit gleichartiger oder unterschiedlicher Porenverteilung bestehen.

17. Elektrochemische Zelle nach Anspruch 14 bis 16, **dadurch gekennzeichnet**, daß mindestens eine Strukturscheiderlage von Blei nicht benetzt wird.
